# EUROPEAN PATENT APPLICATION

(11) **EP 4 752 737 A1**
(43) Date of publication of application: **03.06.2026**
(21) Application number: 24857666.2
(22) Date of filing: 29.02.2024
(51) Int. Cl.: G06F 12/109

(54) **MEMORY MANAGEMENT METHOD AND APPARATUS, AND COMPUTING DEVICE**

(30) Priority: 28.08.2023 CN 202311095589
(71) Applicant: HUAWEI TECHNOLOGIES CO., LTD., Shenzhen 518129 (CN)
(72) Inventor: ZHU, Weixi, Shenzhen, Guangdong 518129 (CN); WANG, Bin, Shenzhen, Guangdong 518129 (CN); LIU, Chao, Shenzhen, Guangdong 518129 (CN); LUO, Chunsheng, Shenzhen, Guangdong 518129 (CN); YANG, Yanchao, Shenzhen, Guangdong 518129 (CN); YANG, Kunlin, Shenzhen, Guangdong 518129 (CN); LIN, Feilong, Shenzhen, Guangdong 518129 (CN); FENG, Jiangtian, Shenzhen, Guangdong 518129 (CN); FANG, Chuangchuang, Shenzhen, Guangdong 518129 (CN)
(74) Representative: Pfenning, Meinig & Partner mbB
(86) International application number: PCT/CN2024/079249
(87) International publication number: WO 2025/044111

(57) **Abstract**

A memory management method and apparatus, and a computing device are disclosed. The method is executed by a GMEM system. After receiving a physical memory range, memory management unit operations, and an accelerator device address that are of an accelerator device, the GMEM system configures a memory management unit operations interface for the accelerator device. This allows a device in which the GMEM system is located to manage a memory management unit and physical memory of the accelerator device by using a driver of the accelerator device through the memory management unit operations interface of the accelerator device, to read and write data. The GMEM system in this application expands a native memory management interface of an operating system into a heterogeneous memory management interface. This supports programming of a unified virtual address space, and configures memory management unit operations interfaces for various types of accelerator devices. In this way, the device in which the GMEM system is located can support use of a plurality of types of accelerator devices, eliminating the need to consider compatibility between memory interfaces of the various types of accelerator devices.

## Description

This application claims priority to Chinese Patent Application No. 202311095589.3, filed with the China National Intellectual Property Administration on August 28, 2023 and entitled "MEMORY MANAGEMENT METHOD AND APPARATUS, AND COMPUTING DEVICE", which is incorporated herein by reference in its entirety.

### TECHNICAL FIELD

The present invention relates to the field of artificial intelligence technologies, and in particular, to a memory management method and apparatus, and a computing device.

### BACKGROUND

With development of artificial intelligence (artificial intelligence, AI), a single processor cannot meet computing requirements in fields such as AI. In a related technology, a chip vendor can integrate a plurality of computing devices of different types such as processors, accelerators, or co-processors, to form a heterogeneous chip. The heterogeneous chip may use a plurality of computing devices to jointly execute a computing task, to meet the computing requirements in the fields such as AI. In a heterogeneous programming architecture of the heterogeneous chip, two separate virtual address spaces are needed, and two different buffers (buffer) need to be maintained for each piece of data. For common data, a user needs to manually manage data migration. For data of a complex structure such as a graph or a tree, the user needs to perform complex data format conversion, and then manually manage data migration.

To resolve a data migration problem of the heterogeneous chip, a related technology provides a programming solution based on a unified virtual address space (unified virtual address space, UVAS). Specifically, the solution is to add a third-party driver to the heterogeneous chip. The third-party driver can manage specified memory, and works with a user-mode unified memory application interface. For example, a unified virtual memory (unified virtual memory, UVM) driver of a compute unified device architecture (compute unified device architecture, CUDA) of Nvidia is provided by the CUDA through a cudaMallocManaged interface. Both a central processing unit (central processing unit, CPU) and a graphics processing unit (graphics processing unit, GPU) can directly access a virtual address applied for through the interface. When the CPU or GPU accesses the virtual address, the UVM driver establishes a mapping relationship between the virtual address and CPU memory or GPU memory by associating GPU memory management (memory management, MM) and Linux MM, to ensure that the CPU or GPU can properly access the virtual address.

However, the third-party driver configured for each heterogeneous chip cannot be replicated to another type of heterogeneous chip, which causes high development costs. After the third-party driver is newly added to the heterogeneous chip, a complex memory management system needs to be configured for the heterogeneous chip to manage local memory of an accelerator. This results in high code duplication in the heterogeneous chip and performance deterioration of the heterogeneous chip.

### SUMMARY

To resolve the foregoing problem, embodiments of this application provide a memory management method that expands a native memory interface of an operating system to an interface that supports heterogeneous memory management. The interface may support simultaneous use of a plurality of types of accelerator chips in a user process, eliminating the need to consider compatibility between memory interfaces of various types of accelerator chips. In addition, this application further provides a memory management apparatus and a computing device that correspond to the memory management method.

Therefore, the following technical solutions are used in embodiments of this application.

According to a first aspect, this application provides a memory management method, and the method is executed by a generalized memory management GMEM system. The method includes: receiving device information of at least one mounted accelerator device, where the device information includes a physical memory address, memory management unit operations, and an accelerator device address that are of the accelerator device; separately configuring a memory management unit operations interface for the at least one loading device, where the memory management unit operations interface uses, by using the memory management unit operations, a driver of the accelerator device that corresponds to the accelerator device address; and managing, by using the driver of the accelerator device, physical memory that corresponds to the physical memory address of the accelerator device, to read and write data.

In this implementation, after receiving a physical memory range, the memory management unit operations, and the accelerator device address that are of the accelerator device, the GMEM system configures the memory management unit operations interface for the accelerator device. This allows a device in which the GMEM system is located to manage a memory management unit and physical memory of the accelerator device by using the driver of the accelerator device through the memory management unit operations interface of the accelerator device, to read and write data. The GMEM system in this application may expand a native memory management interface of an operating system into a heterogeneous memory management interface. This supports programming of a unified virtual address space, and configures the memory management unit operations interfaces for various types of accelerator devices. In this way, the device in which the GMEM system is located can support use of a plurality of types of accelerator devices, eliminating the need to consider compatibility between memory interfaces of the various types of accelerator devices.

In an implementation, the method further includes: receiving a non-uniform memory access NUMA identifier ID; and in response to an accelerator device that corresponds to the NUMA ID being in a peer-to-peer mode, sending a request instruction to the accelerator device that corresponds to the NUMA ID, where the request instruction instructs the accelerator device that corresponds to the NUMA ID to apply for a first virtual address, and the first virtual address is a virtual address applied for by the GMEM system.

In this implementation, after receiving the NUMA ID, when determining that the accelerator device that corresponds to the NUMA ID is in a peer-to-peer mode, the GMEM system may apply for the virtual address, and enable the accelerator device that corresponds to the NUMA ID to apply for the same virtual address. The GMEM system may replicate, based on the applied virtual address, data of the GMEM system to memory of the accelerator device that corresponds to the NUMA ID.

In an implementation, the method further includes: in response to a page fault being triggered when data is written, detecting whether a mapping relationship of a host exists in a logical page table of the GMEM system, where the page fault means that a physical address cannot be mapped based on the virtual address, and the mapping relationship is a relationship in which the virtual address is mapped to the physical address; and in response to the mapping relationship of the host not existing in the logical page table of the GMEM system, establishing the mapping relationship of the host, and storing the mapping relationship of the host in the logical page table of the GMEM system.

In this implementation, when writing data, the GMEM system detects whether the mapping relationship exists in the logical page table of the GMEM system after a page fault is triggered. If the GMEM system detects that the mapping relationship does not exist in the logical page table of the GMEM system, that is, a current virtual address is not mapped to the physical memory. The GMEM system updates the logical page table, and establishes, in the logical page table, a mapping relationship of memory that is of the GMEM system and to which the applied virtual address points, so that the GMEM system continues to write input data.

In an implementation, the method further includes: receiving page fault information of a first accelerator device, where the page fault information indicates that a page fault is triggered when the first accelerator device accesses the virtual address, and the at least one accelerator device includes the first accelerator device; querying, based on the page fault information, whether a mapping relationship of the virtual address accessed by the first accelerator device exists in the logical page table of the GMEM system; in response to the mapping relationship of the virtual address accessed by the first accelerator device not existing in the logical page table of the GMEM system, calling the memory management unit operations interface of the first accelerator device to establish the mapping relationship of the virtual address accessed by the first accelerator device; and in response to the mapping relationship of the virtual address existing in the logical page table of the GMEM system, calling the memory management unit operations interface of the first accelerator device to replicate data in memory that is mapped to the virtual address accessed by the first accelerator device to memory of the first accelerator device, and establishing a mapping relationship of the first accelerator device.

In this implementation, when triggering the page fault, the accelerator device generates the page fault information, and sends the page fault information to the GMEM system. After receiving the page fault information, the GMEM system detects whether a mapping relationship of the accelerator device exists in the logical page table of the GMEM system. When determining that the mapping relationship of the accelerator device exists in the logical page table of the GMEM system, the GMEM system may call the memory management unit operations interface of the accelerator device to establish the mapping relationship of the accelerator device, to replicate data of the GMEM system to the memory of the accelerator device.

In an implementation, the method further includes: in response to the page fault being triggered when data output by the first accelerator device is read, detecting whether a mapping relationship of a current virtual address exists in the logical page table of the GMEM system; and in response to the mapping relationship of the current virtual address existing in the logical page table of the GMEM system, replicating, to memory of the host, data in the memory that is of the first accelerator device and to which the current virtual address points, and changing a mapping relationship of the memory that is of the first accelerator device and to which the current virtual address points to a mapping relationship of the memory that is of the host and to which the current virtual address points.

In this implementation, when the GMEM system reads a computing result of the accelerator device, the page fault is triggered. The GMEM system detects whether the mapping relationship of the current virtual address exists in the logical page table of the GMEM system. When determining that the mapping relationship exists, the GMEM system may map the current virtual address to memory of the accelerator device, and replicate data in the memory that is of the accelerator device and that is mapped to the current virtual address to memory of the device in which the GMEM system is located, so that the GMEM system reads the computing result of the accelerator device.

In an implementation, the method further includes: responding to a call of a system call (system call) of memory replication (hmemcpy); determining, based on the logical page table of the GMEM system, a source device corresponding to a source address of the system call and a target device corresponding to a target address of the system call; and replicating data of the source device to the target device.

In this implementation, the GMEM system may use the system call of memory replication. In this case, physical locations of the source address and the target address do not need to be specified, and data is automatically obtained based on the logical page table, which improves usability. When data replication is performed between the GMEM system and the accelerator device, page prefetching semantics may be combined, and forwarding by a master node is not needed, which can efficiently utilize bandwidth of a high-speed bus between devices.

In an implementation, the method further includes: after receiving the NUMA ID, replicating the data of the source device to the accelerator device that corresponds to the NUMA ID.

In this implementation, a user may also specify the target device, for example, deliver the target device to the GMEM system through a heterogeneous NUMA ID. The GMEM system may use the system call of memory replication to directly and implicitly complete data replication from the source device to the target device. Compared with a mode of performing prefetching and then replication or a mode of performing replication and then prefetching, this mode reduces overheads for performing memory replication once.

In an implementation, the method further includes: detecting whether used memory of a memory pool is greater than a specified threshold; and in response to the used memory of the memory pool being greater than the specified threshold, releasing a part or all of memory that is no longer used after use.

In this implementation, the GMEM system may apply for memory from the memory pool to run the accelerator device, and the GMEM system needs to collect statistics on whether the used memory of the memory pool is greater than the specified threshold. If the used memory is greater than the specified threshold, the GMEM system needs to use the page discarding semantics for cached released memory to release the physical memory until the threshold is met or all caches are released.

In an implementation, the method further includes: after receiving the NUMA ID and the virtual address, querying whether a mapping relationship of the virtual address exists in the logical page table of the GMEM system; in response to the mapping relationship of the virtual address existing in the logical page table of the GMEM system, replicating the data in the memory that is mapped to the virtual address to memory of the accelerator device that corresponds to the NUMA ID, and establishing, through a memory management unit operations interface of the accelerator device that corresponds to the NUMA ID, a mapping relationship between the virtual address and the memory of the accelerator device that corresponds to the NUMA ID; and in response to the mapping relationship of the virtual address not existing in the logical page table of the GMEM system, establishing, through the memory management unit operations interface of the accelerator device that corresponds to the NUMA ID, a mapping relationship between the virtual address and the memory of the accelerator device that corresponds to the NUMA ID.

In this implementation, the GMEM system receives the NUMA ID and the virtual address, and when detecting that the mapping relationship of the virtual address exists in the logical page table of the GMEM system, the GMEM system may directly replicate data mapped to the virtual address to the accelerator device that corresponds to the NUMA ID. By prefetching data in advance, the GMEM system can reduce execution time and improve running performance of the GMEM system.

In an implementation, the method further includes: receiving failure information of the first accelerator device, where the failure information is a message indicating that the first accelerator device fails to apply for memory; and sending a replication instruction to the first accelerator device, where the replication instruction instructs the first accelerator device to replicate data in memory that is being used to the memory of the host, and release the memory that is being used.

In this implementation, when the memory of the accelerator device is insufficient, a part of memory that is being used may be swapped to host memory to release the memory of the accelerator device, so that the GMEM system supports a memory overcommitment function of the accelerator device.

According to a second aspect, this application provides a memory management apparatus, including: a transceiver unit, configured to receive device information of at least one mounted accelerator device, where the device information includes a physical memory address, memory management unit operations, and an accelerator device address that are of the accelerator device; and a processing unit, configured to: separately configure a memory management unit operations interface for the at least one loading device, where the memory management unit operations interface uses, by using the memory management unit operations, a driver of the accelerator device that corresponds to the accelerator device address; and manage, by using the driver of the accelerator device, physical memory that corresponds to the physical memory address of the accelerator device, to read and write data.

In an implementation, the transceiver unit is further configured to receive a non-uniform memory access NUMA identifier ID; and the processing unit is further configured to: in response to an accelerator device that corresponds to the NUMA ID being in a peer-to-peer mode, send a request instruction to the accelerator device that corresponds to the NUMA ID, where the request instruction instructs the accelerator device that corresponds to the NUMA ID to apply for a first virtual address, and the first virtual address is a virtual address applied for by the GMEM system.

In an implementation, the processing unit is further configured to: in response to a page fault being triggered when data is written, detect whether a mapping relationship of a host exists in a logical page table of a GMEM system, where the page fault means that a physical address cannot be mapped based on the virtual address, and the mapping relationship is a relationship in which the virtual address is mapped to the physical address; and in response to the mapping relationship of the host not existing in the logical page table of the GMEM system, establish the mapping relationship of the host, and store the mapping relationship of the host in the logical page table of the GMEM system.

In an implementation, the transceiver unit is further configured to receive page fault information of a first accelerator device, where the page fault information indicates that a page fault is triggered when the first accelerator device accesses the virtual address, and the at least one accelerator device includes the first accelerator device; the processing unit is further configured to: query, based on the page fault information, whether a mapping relationship of the virtual address accessed by the first accelerator device exists in the logical page table of the GMEM system; in response to the mapping relationship of the virtual address accessed by the first accelerator device not existing in the logical page table of the GMEM system, call the memory management unit operations interface of the first accelerator device to establish the mapping relationship of the virtual address accessed by the first accelerator device; and in response to the mapping relationship of the virtual address existing in the logical page table of the GMEM system, call the memory management unit operations interface of the first accelerator device to replicate data in memory that is mapped to the virtual address accessed by the first accelerator device to memory of the first accelerator device, and establish a mapping relationship of the first accelerator device.

In an implementation, the processing unit is further configured to: in response to the page fault being triggered when data output by the first accelerator device is read, detect whether a mapping relationship of a current virtual address exists in the logical page table of the GMEM system; and in response to the mapping relationship of the current virtual address existing in the logical page table of the GMEM system, replicate, to memory of the host, data in the memory that is of the first accelerator device and to which the current virtual address points, and change a mapping relationship of the memory that is of the first accelerator device and to which the current virtual address points to a mapping relationship of the memory that is of the host and to which the current virtual address points.

In an implementation, the processing unit is further configured to: respond to a call of a system call of memory replication; determine, based on the logical page table of the GMEM system, a source device corresponding to a source address of the system call and a target device corresponding to a target address of the system call; and replicate data of the source device to the target device.

In an implementation, the processing unit is further configured to: after receiving the NUMA ID, replicate the data of the source device to the accelerator device that corresponds to the NUMA ID.

In an implementation, the processing unit is further configured to: detect whether used memory of a memory pool is greater than a specified threshold; and in response to the used memory of the memory pool being greater than the specified threshold, release a part or all of memory that is no longer used after use.

In an implementation, the transceiver unit is further configured to: after receiving the NUMA ID and the virtual address, query whether a mapping relationship of the virtual address exists in the logical page table of the GMEM system; and the processing unit is further configured to: in response to the mapping relationship of the virtual address existing in the logical page table of the GMEM system, replicate the data in the memory that is mapped to the virtual address to memory of the accelerator device that corresponds to the NUMA ID, and establish, through a memory management unit operations interface of the accelerator device that corresponds to the NUMA ID, a mapping relationship between the virtual address and the memory of the accelerator device that corresponds to the NUMA ID; and in response to the mapping relationship of the virtual address not existing in the logical page table of the GMEM system, establish, through the memory management unit operations interface of the accelerator device that corresponds to the NUMA ID, the mapping relationship between the virtual address and the memory of the accelerator device that corresponds to the NUMA ID.

In an implementation, the transceiver unit is further configured to: receive failure information of the first accelerator device, where the failure information is a message indicating that the first accelerator device fails to apply for memory; and send a replication instruction to the first accelerator device, where the replication instruction instructs the first accelerator device to replicate data in memory that is being used to the memory of the host, and release the memory that is being used.

According to a third aspect, an embodiment of this application provides a computing device, including at least one storage and a plurality of processors. The plurality of processors include a main processor, and the main processor is configured to execute instructions stored in the at least one storage, to enable the computing device to perform the embodiments according to the possible implementations of the first aspect.

According to a fourth aspect, an embodiment of this application provides a computer-readable storage medium. The computer-readable storage medium stores a computer program. When the computer program is executed on a computer, the computer is enabled to perform the embodiments according to the possible implementations of the first aspect.

According to a fifth aspect, an embodiment of this application further provides a computer program product. The computer program product stores instructions. When the instructions are executed by a computer, the computer is enabled to implement the embodiments according to the possible implementations of the first aspect.

### BRIEF DESCRIPTION OF DRAWINGS

The following briefly describes accompanying drawings required for describing embodiments or the prior art.
FIG. 1 is a diagram of a structure of a CUDA in a related technology;
FIG. 2 is a diagram of a structure of a heterogeneous device according to an embodiment of this application;
FIG. 3 is a diagram of a structure of a generalized memory management system according to an embodiment of this application;
FIG. 4 is a diagram of a structure of a kernel mode according to an embodiment of this application;
FIG. 5 is a schematic flowchart of applying for a unified virtual address by a GMEM system according to an embodiment of this application;
FIG. 6A and FIG. 6B are a schematic flowchart of performing data transmission between a heterogeneous device and a mounted device based on a memory consistency protocol according to an embodiment of this application;
FIG. 7 is a schematic flowchart of using heterogeneous memory semantics by a GMEM system according to an embodiment of this application;
FIG. 8 is a diagram of a structure of data transmission between a host side and an accelerator side according to an embodiment of this application;
FIG. 9A and FIG. 9B are a schematic flowchart of performing memory replication by a server according to an embodiment of this application;
FIG. 10 is a schematic flowchart of applying for memory in a user mode based on an AI framework according to an embodiment of this application;
FIG. 11 is a schematic flowchart of performing memory overcommitment by an NPU according to an embodiment of this application; and
FIG. 12 is a diagram of a structure of a memory management apparatus according to an embodiment of this application.

### DESCRIPTION OF EMBODIMENTS

The following describes the technical solutions in embodiments of this application with reference to the accompanying drawings in embodiments of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word such as "example" or "for example" is used to represent an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In descriptions of embodiments of this application, unless otherwise specified, "a plurality of" means two or more. For example, a plurality of processing units mean two or more processing units, and a plurality of elements mean two or more elements.

For ease of understanding the solutions in embodiments of this application, the following first explains technical terms in this specification.

A peer-to-peer mode means that in a system formed by a plurality of nodes (peers) that have independent operating systems, the plurality of nodes include a master node and at least one peer node, and the master node manages the peer node. In addition, to assist the master node in managing the peer node, a process needs to be created on each node. A process on the master node is a master process, and a process on the peer node is a co-process.

A master-slave mode means a system including a node having an independent operating system and at least one slave device (not having an independent operating system).

A logical page table (logical page table) is a hardware-independent page table. The logical page table is used to implement a mapping relationship between a virtual address and a physical address, to support a paging mechanism. Usually, the logical page table divides a virtual address space of a process into pages of a fixed size (the size usually is 4 KB/2 MB), and maps each page to a corresponding page in physical memory. The logical page table records a mapping relationship between each virtual page and a physical page that corresponds to the virtual page.

Memory consistency (memory consistency) means that in a multi-core (core) or multi-processor system, after a core or processor writes data into a virtual address, when another core or processor accesses a same virtual address, it can be ensured that data written by the former core or processor is read.

Page migration (page migration) is a process of migrating a page from a physical memory location to another physical memory location in an operating system. In a multi-core or multi-processor system, when a page is migrated from a source node to a target node, the source node first cancels a mapping of a local virtual address, to invalidate a page table buffer (translation lookaside buffer, TLB). Then, the target node needs to apply for memory, and replicate data in memory of the source node to memory of the target node. After the source node completes a replication operation, the memory of the source node may be released.

Page discard semantics (page discard semantics) is a policy in virtual memory management that determines when a page can be marked as no longer needed. When a page is no longer used by an active process or thread, the page discard semantics can determine when to release the page. The page discard semantics can effectively manage memory, and can free up physical memory for use by another active process when needed.

Data prefetching (data prefetching) is a technology by which a processor or storage system obtains data in advance to reduce a data access latency. After receiving a trigger action, from a user, data prefetching loads data to a cache or the storage system in advance to reduce waiting time for subsequent access.

Reverse mapping (reverse mapping) is a process of searching for a corresponding virtual address based on a physical address. In virtual memory management of an operating system, a reverse query of memory mapping is usually implemented through reverse mapping. Conversely, forward mapping is a process of mapping a virtual address to a physical address. That is, a corresponding physical memory address is searched for based on a given virtual address.

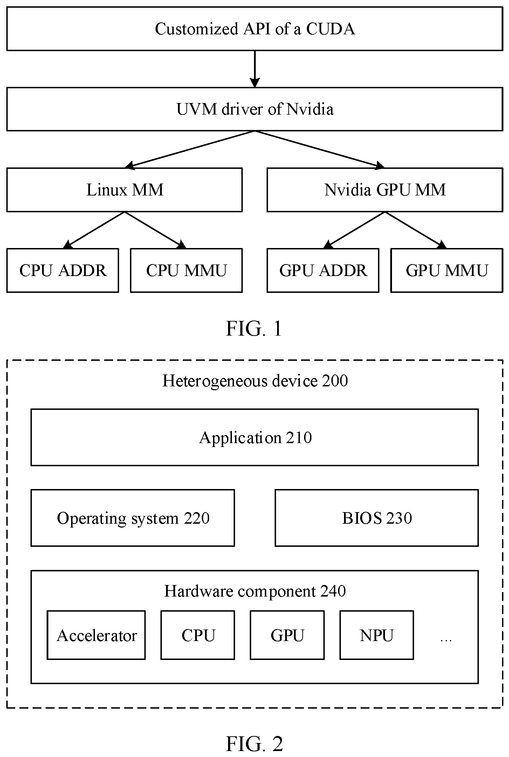

FIG. 1 is a diagram of a structure of a CUDA in a related technology. As shown in FIG. 1, the CUDA includes an application programming interface (application programming interface, API), a UVM driver, Linux MM, GPU MM, a CPU address (address, ADDR), a CPU memory management unit (memory management unit, MMU), a GPU ADDR, and a GPU MMU.

The CUDA calls a customized API (for example, cudaMallocManaged) to apply for memory. The UVM driver calls a Linux MM interface to apply for a virtual address, and then maintains, in the GPU MM, the applied virtual address. Writing input data of an operator triggers a CPU page fault. The page fault means that when data is written, the CPU accesses the virtual address, and the CPU MMU triggers an error of mapping the virtual address to a physical address. The CPU delivers the page fault to the operator, allowing the operator to run, which triggers a GPU page fault. In this case, the UVM driver needs to read a page table of the CPU, to obtain CPU memory corresponding to a virtual address that triggers the page fault. The UVM driver replicates data in the CPU memory to GPU memory to complete page fault processing. After running of the operator ends, the memory is released.

In a related technology, the UVM driver can resolve a problem of GPU programming difficulty in a UVAS programming framework of the GPU and the CUDA. However, due to a limitation of a software stack, the UVM driver cannot be reused to another type of accelerator chip. In addition, the entire solution involves complex interaction between the UVM driver, the Linux MM, and the GPU MM, which causes redundant metadata and a processing process, and results in poor performance.

To address a defect in a related technology, embodiments of this application provide a memory management method. After receiving a physical memory range, memory management unit operations, and an accelerator device address that are of an accelerator device, an operating system configures a memory management unit operations interface for the accelerator device. This allows a device in which a GMEM system is located to manage a memory management unit and physical memory of the accelerator device by using a driver of the accelerator device through the memory management unit operations interface of the accelerator device, to read and write data. The operating system may expand a native memory management interface of the operating system into a heterogeneous memory management interface. This can support programming of a unified virtual address space, and configure memory management unit operations interfaces for various types of accelerator devices. In this way, the device in which the GMEM system is located can support use of a plurality of types of accelerator devices, eliminating the need to consider compatibility between memory interfaces of the various types of accelerator devices.

FIG. 2 is a diagram of a structure of a heterogeneous device according to an embodiment of this application. As shown in FIG. 2, the heterogeneous device 200 includes an application 210, an operating system 220, a basic input/output system (basic input/output system, BIOS) 230, and a hardware component 240.

The application 210 is a computer program that completes one or more specific tasks. The application 210 is installed in the operating system 220, and may interact with a user. After receiving an operation instruction of the user, the application 210 creates one or more execution tasks. Each application 210 runs on an independent process and has an independent address space.

The operating system 220 is a set of interrelated system software programs that supervise and control an operation and running of a computer, run hardware and software resources, and provide public services to organize user interaction. The operating system 220 may perform scheduling work on various resource blocks of the heterogeneous device 200, including software and hardware devices, data information, and the like. By using the operating system of the computer, work intensity of manual resource allocation may be reduced, a degree of user intervention on a computer operation is reduced, and intelligent working efficiency of the computer can be greatly improved. The operating system 320 may be a Linux system, a real-time operating system (real-time operating system, RTOS), or the like.

The BIOS 230 is an industry standard firmware interface. The BIOS 230 is a set of programs that are fixed on a read-only memory (read-only memory, ROM) chip on a main board of the computer, and stores a most important basic input/output program of the computer, a power-on self-check program, and a system auto-startup program. A main function of the BIOS 230 is to provide fundamental and most direct hardware settings and control for a computer. The BIOS 230 does not directly control the hardware component 240, but provides an abstraction layer and directly controls the hardware component 240.

The hardware component 240 includes various hardware of the heterogeneous device 200, such as an accelerator, a GPU, a CPU, and a neural processing unit (neural processing unit, NPU). The hardware component 240 is configured to support normal working of the heterogeneous device 200.

A kernel of the operating system 220 is a core part of the operating system 220, and is responsible for managing resources of the system and providing various services. A memory space in which the operating system 220 runs may be divided into two parts: a kernel space and a user space. The user space is a space in which user program code is run. The kernel space is a space in which kernel code is run. When a process runs in the user space, the process is in a "user mode (user model)". The process in the user mode is also referred to as a user-mode process. When a process runs in the kernel space, the process is in a "kernel mode (kernel model)". The process in the kernel mode is also referred to as a kernel-mode process.

In a design of the operating system 220, the user mode is an unprivileged execution state. The kernel of the operating system 220 prohibits code in this state from performing a potentially dangerous operation, for example, writing a system configuration file, killing a process of another user, or restarting the system. The kernel mode is a privileged execution state. The kernel of the operating system 220 may perform any operation on code in this state.

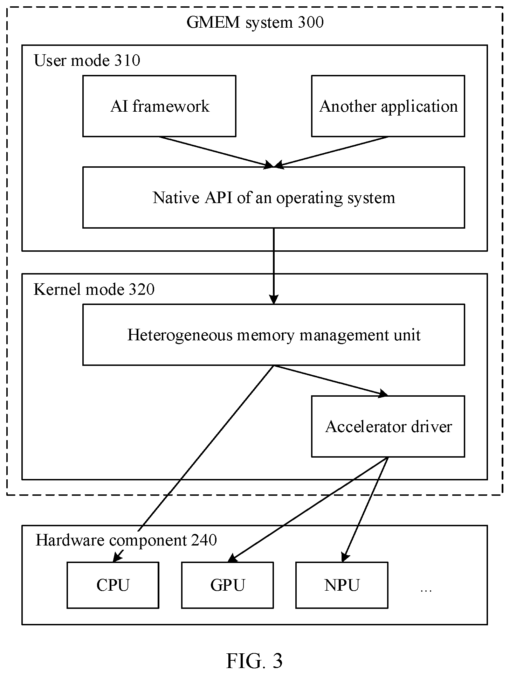

FIG. 3 is a diagram of a structure of a generalized memory management system according to an embodiment of this application. As shown in FIG. 3, the generalized memory management (generalized memory management, GMEM) system 300 includes a user mode 310 and a kernel mode 320. The user mode 310 includes an AI framework (AI framework), an application, and a native API of the operating system 220.

The AI framework is a software tool set used to develop, train, and deploy an AI model. The AI framework provides a series of tools and interfaces for a developer to conveniently build and operate the AI model. Common AI frameworks include TensorFlow, PyTorch, Keras, MXNet, MindSpore, and the like. In this embodiment of this application, both the AI Framework and the application may support programming of an accelerator device.

An API is a group of functions, classes, or methods provided by the operating system 220 for the application, and is used to implement functions of interacting with and operating the operating system 220. The API defines a communication protocol and an interface specification between the application and the operating system, so that the application can complete various tasks by using functions of the operating system 220. In this embodiment of this application, the AI framework or the application may access and use various functions, such as file system access, process management, and network communication, provided by the operating system 220 by calling a native API of the operating system 220.

The native API of the operating system 220 may be an interface such as an mmap or brk interface. The AI framework or the application may use the interface such as the mmap or brk interface to apply for memory for an accelerator.

The kernel mode 320 includes a heterogeneous memory management unit and an accelerator driver. The heterogeneous memory management unit is configured to be responsible for managing virtual addresses and physical memory of devices such as a CPU, a GPU, an NPU, and the accelerator. The accelerator driver is configured to be responsible for interacting with accelerators such as the GPU and NPU. A local memory management function for the accelerator, for example, a memory management unit operations (memory management unit operations, MMU ops), is newly added to the accelerator driver, and is used to access a memory management system of the kernel mode 320.

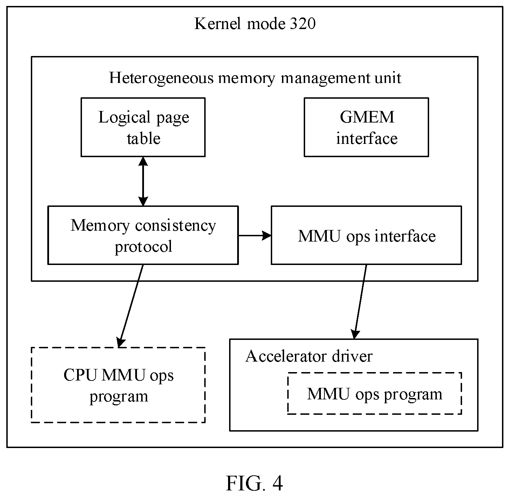

As shown in FIG. 4, the native API of the operating system 220 may expand a native memory management interface of the operating system 220 into a GMEM interface, for example, the interface such as the mmap or brk interface. When the operating system 220 is in a peer-to-peer mode, a virtual address is first applied for on a master process, and then the same virtual address is applied for on a co-process of a peer node. When the operating system 220 is in a master-slave mode, the heterogeneous device 200 is supported to directly use a virtual address applied for through the interface such as the mmap or brk interface of a host. A newly added GMEM interface (for example, an hmadvise interface) may apply a plurality of heterogeneous memory semantics, to support functions such as page discard semantics and data prefetching, and may add a new function of the GMEM system 300 and improve performance of the GMEM system 300.

An MMU ops program may be set inside the accelerator driver, and is configured to provide a registration interface for the MMU operations (including a page table, a TLB, and the like), so that various types of accelerator drivers implement the MMU ops. The MMU ops program may enable various types of accelerator drivers to be registered with the operating system 220, and the operating system 220 uniformly manages the accelerator drivers.

A logical page table is added to the GMEM system 300. The logical page table includes a plurality of mapping relationships, and each mapping relationship indicates a mapping between the virtual address and a physical address. In this embodiment of this application, the heterogeneous memory management unit may maintain a mapping relationship between a same virtual address and any physical address (located in different heterogeneous devices) based on the logical page table. When the same virtual address is accessed by different heterogeneous devices 200, the heterogeneous memory management unit may use a logical page table and a registered MMU ops interface to transparently coordinate a plurality of MMU page tables, and complete data migration or data replication, to ensure memory access consistency. The operating system 220 may dynamically switch a bottom-layer memory consistency protocol, and flexibly apply the bottom-layer memory consistency protocol to different application scenarios, to achieve optimal performance.

During initialization, the GMEM system 300 inputs device information such as physical memory, the MMU ops, a device policy (for example, in the peer-to-peer mode or the master-slave mode), and a device address of an external device to the heterogeneous device 200, and registers the device information with the heterogeneous memory management unit that is of the kernel mode 320. After receiving the device information of each heterogeneous device, the heterogeneous memory management unit allocates a non-uniform memory access (non-uniform memory access, NUMA) node identifier (identifier, ID) to each external device, and downloads a driver of each external device. In this way, each external device can access a unified heterogeneous memory management architecture of the operating system of the heterogeneous device 200, so that the heterogeneous device 200 uses a corresponding device driver through the MMU ops, and manages the physical memory by using the device driver, to read and write data.

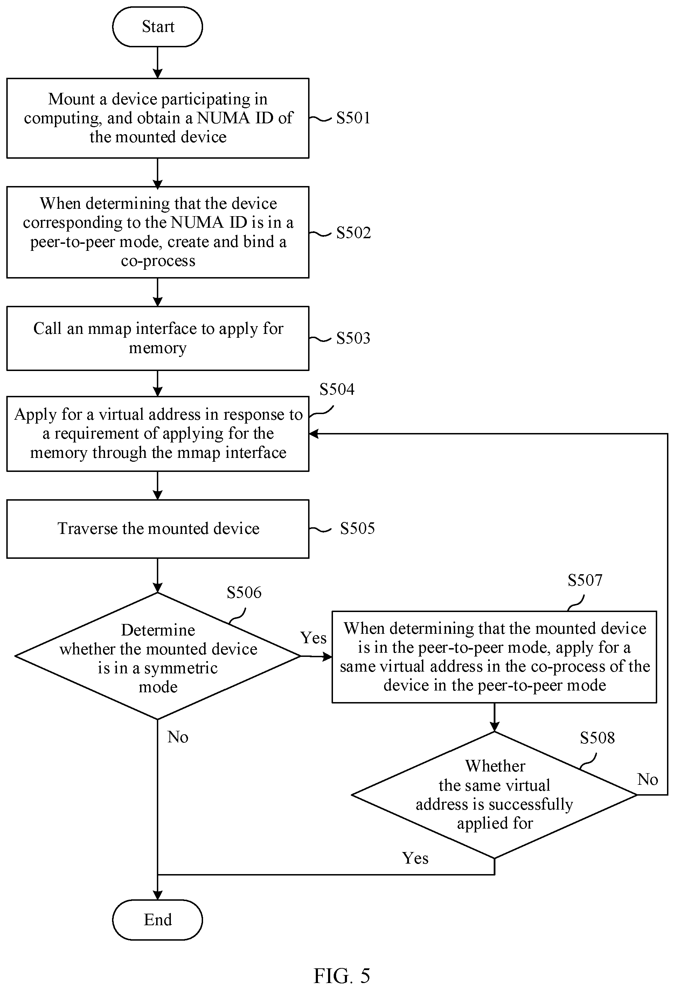

FIG. 5 is a schematic flowchart of applying for a unified virtual address by the GMEM system according to an embodiment of this application. As shown in FIG. 5, a procedure of applying for the unified virtual address by the GMEM system 300 is specifically as follows.

S501: In the user mode 310, mount a device participating in computing, and obtain a NUMA ID of the mounted device. The mounted device is a device that sends device information of the mounted device to the heterogeneous device 200.

S502: In the kernel mode 320, when determining that the device corresponding to the NUMA ID is in the peer-to-peer mode, create and bind a co-process.

S503: In the user mode 310, call the mmap interface to apply for memory.

S504: In the kernel mode 320, apply for a virtual address in response to a requirement of applying for the memory through the mmap interface.

S505: In the kernel mode 320, traverse the mounted device.

S506: In the kernel mode 320, determine whether the mounted device is in the peer-to-peer mode. In one case, when it is determined in the kernel mode 320 that the mounted device is in the peer-to-peer mode, procedure S507 is performed. In another case, when it is determined in the kernel mode 320 that the mounted device is not in the peer-to-peer mode, that is, in the master-slave mode, the procedure is directly ended.

S507: In the kernel mode 320, when determining that the mounted device is in the peer-to-peer mode, apply for a same virtual address in the co-process of the device in the peer-to-peer mode.

S508: In the kernel mode 320, detect whether the same virtual address is successfully applied for in all devices in the peer-to-peer mode. In one case, when it is determined in the kernel mode 320 that the same virtual address is successfully applied for in all the devices in the peer-to-peer mode, the procedure is directly ended. In another case, when it is determined in the kernel mode 320 that the same virtual address is not successfully applied for in all the devices in the peer-to-peer mode, procedure S504 is performed.

In this embodiment of this application, when a user process is started, in the user mode 310, the mmap interface is called to apply for a segment of virtual memory, and traverse a mounted device of the current process. For a mounted device in the master-slave mode, no additional operation is required in the user mode 310. For a mounted device in the peer-to-peer mode, in the user mode 310, a co-process may be first created on a peer device, and the co-process is bound to a master process. Then, in the kernel mode 320, a same virtual address is applied for on the co-process. In the kernel mode 320, if the device fails to be applied for, another virtual address continues to be applied for until the same virtual address is applied for in all devices.

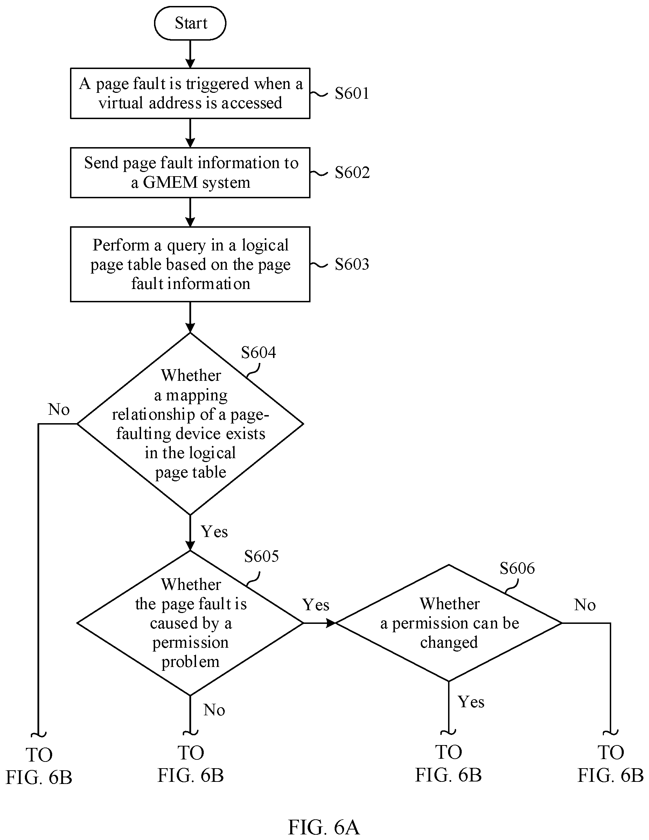

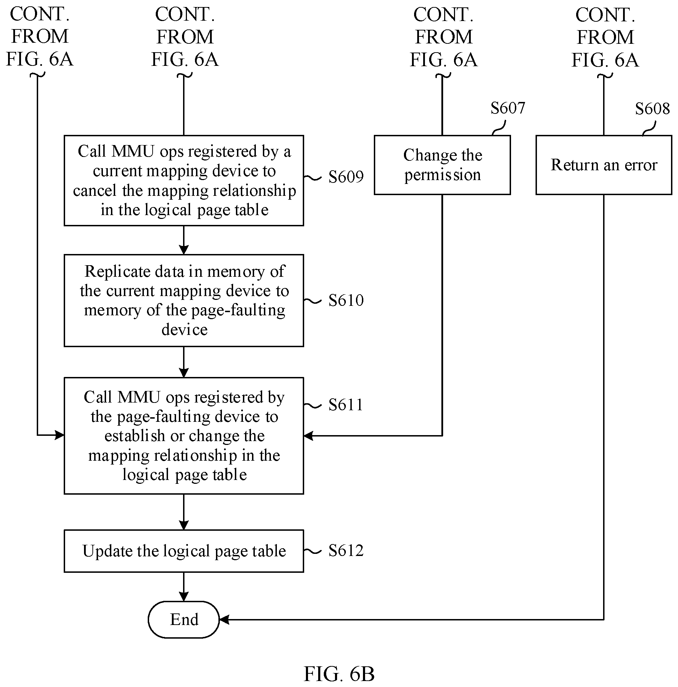

FIG. 6A and FIG. 6B are a schematic flowchart of performing data transmission between the heterogeneous device and the mounted device based on a memory consistency protocol according to an embodiment of this application. As shown in FIG. 6A and FIG. 6B, a procedure of performing data transmission between the heterogeneous device 200 and the mounted device based on the memory consistency protocol is specifically as follows.

S601: A page fault is triggered when a page-faulting device accesses a virtual address. In this case, the heterogeneous device determines that the virtual address is not mapped to a physical address. As a result, the heterogeneous device cannot access the virtual address, which is referred to as the "page fault". To distinguish a heterogeneous device in this state from a heterogeneous device in a normal state, the heterogeneous device in this state is defined as the page-faulting device.

S602: The page-faulting device sends page fault information to the GMEM system 300.

S603: The GMEM system 300 performs a query in a logical page table based on the page fault information.

S604: The GMEM system 300 detects whether a mapping relationship of the page-faulting device exists in the logical page table. In one case, the GMEM system 300 detects that the mapping relationship of the page-faulting device exists in the logical page table, and performs procedure S605. In another case, the GMEM system 300 detects that the mapping relationship of the page-faulting device does not exist in the logical page table, and performs procedure S611.

S605: The GMEM system 300 detects whether the page fault is caused by a permission problem. In one case, the GMEM system 300 detects that the page fault is caused by the permission problem, and performs procedure S606. In another case, the GMEM system 300 detects that the page fault is not caused by the permission problem, and performs procedure S609. The permission problem is a permission of the MMU page table. That is, the MMU page table indicates a read operation, or the MMU page table indicates a write operation.

S606: The GMEM system 300 detects whether the permission can be changed. In one case, the GMEM system 300 detects that the permission can be changed, and performs procedure S607. In another case, the heterogeneous device 200 detects that the permission cannot be changed, and performs procedure S608.

S607: The GMEM system 300 changes the permission. That is, the page fault is caused by the permission problem, and the GMEM system 300 changes a permission for mapping to meet a requirement of the page-faulting device.

S608: The GMEM system 300 returns an error.

S609: The GMEM system 300 calls MMU ops registered by a current mapping device to cancel the mapping relationship in the logical page table.

S610: The GMEM system 300 replicates data in memory of the current mapping device to memory of the page-faulting device.

S611: The GMEM system 300 calls MMU ops registered by the page-faulting device to establish or change the mapping relationship in the logical page table.

S612: The GMEM system 300 updates the logical page table.

In this embodiment of this application, when the page-faulting device accesses the virtual address, the page fault is triggered, and the page fault information is forwarded to the GMEM system 300. After receiving the page fault information, the GMEM system 300 may perform a query in the logical page table based on the page fault information. If finding through a query that the mapping relationship of the page-faulting device does not exist in the logical page table of the GMEM system 300, the GMEM system 300 may call the MMU ops registered by the page-faulting device to establish the mapping relationship. After establishing the mapping relationship, the GMEM system 300 may update the logical page table, and establish the mapping relationship of the page-faulting device in the logical page table. If finding that the mapping relationship of the page-faulting device exists in the logical page table of the GMEM system 300, the GMEM system 300 may detect whether the page fault is caused by the permission problem.

If detecting that the page fault is caused by the permission problem, the GMEM system 300 may detect whether the permission can be changed. If detecting that the permission can be changed, the GMEM system 300 changes the permission, and then calls the MMU ops registered by the page-faulting device to change the mapping relationship. If detecting that the permission cannot be changed, the GMEM system 300 directly returns the error. If detecting that the page fault is not caused by the permission problem, the GMEM system 300 may obtain the current mapping device based on the logical page table, and then call the MMU ops registered by the current mapping device to cancel a mapping relationship between the GMEM system 300 and the current mapping device. The GMEM system 300 may replicate data to the memory of the page-faulting device, and then call the MMU ops registered by the page-faulting device to establish or change the mapping relationship. The heterogeneous device 200 updates the logical page table, and establishes, in the logical page table, a mapping relationship that points to the page-faulting device.

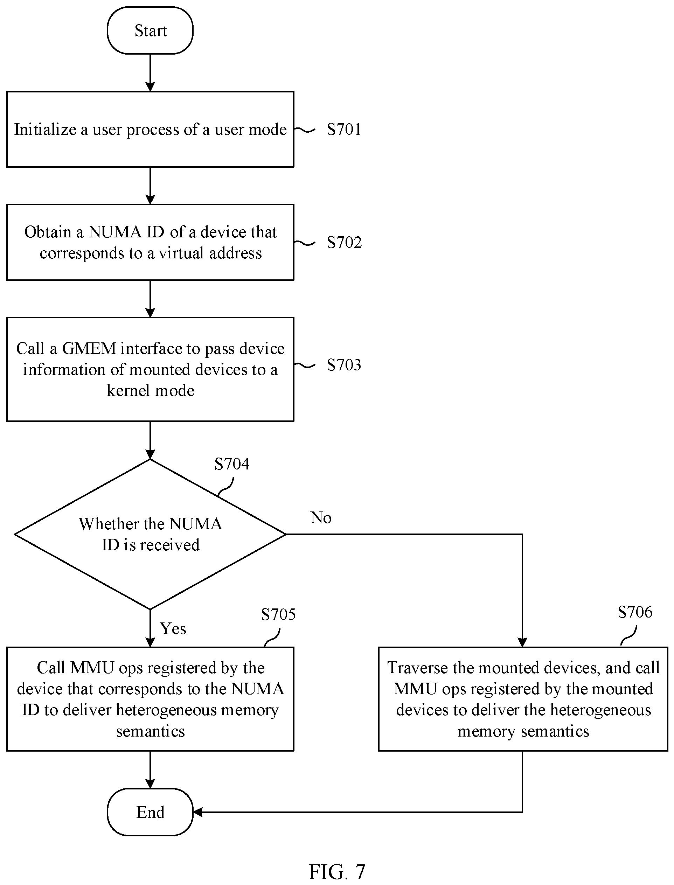

FIG. 7 is a schematic flowchart of using heterogeneous memory semantics by the GMEM system according to an embodiment of this application. As shown in FIG. 7, a procedure of using heterogeneous memory semantics by the GMEM system 300 is specifically as follows.

S701: The GMEM system 300 initializes the user process of the user mode 310.

S702: In the user mode 310, obtain a NUMA ID of a device that corresponds to a virtual address.

S703: In the user mode 310, call the GMEM interface to pass device information of mounted devices to the kernel mode 320. The device information includes information such as the NUMA ID, an applied virtual address, and a used semantic parameter (for example, page discarding semantics and data prefetching).

S704: In the kernel mode 320, detect whether the NUMA ID is received. In one case, the NUMA ID is received in the kernel mode 320, and procedure S705 is performed. In another case, the NUMA ID is not received in the kernel mode 320, and procedure S706 is performed.

S705: In the kernel mode 320, call MMU ops registered by the device that corresponds to the NUMA ID to deliver the heterogeneous memory semantics.

S706: In the kernel mode 320, traverse the mounted devices, and call MMU ops registered by the mounted devices to deliver the heterogeneous memory semantics.

In this embodiment of this application, the GMEM system 300 may obtain, in the user process of the user mode 310, the NUMA ID of the corresponding device based on the virtual address, and then transfer the device information such as the NUMA ID, the virtual address, and the used semantic parameter to the kernel mode 320 through the GMEM interface. If the NUMA ID is received in the kernel mode 320, the MMU ops registered by a specified device may be called to deliver the heterogeneous memory semantics. If the NUMA ID is not received in the kernel mode 320, the mounted device may be traversed, and the MMU ops registered by the mounted device is called to deliver the heterogeneous memory semantics.

For ease of understanding, the following first describes at least one application scenario of embodiments of this application.

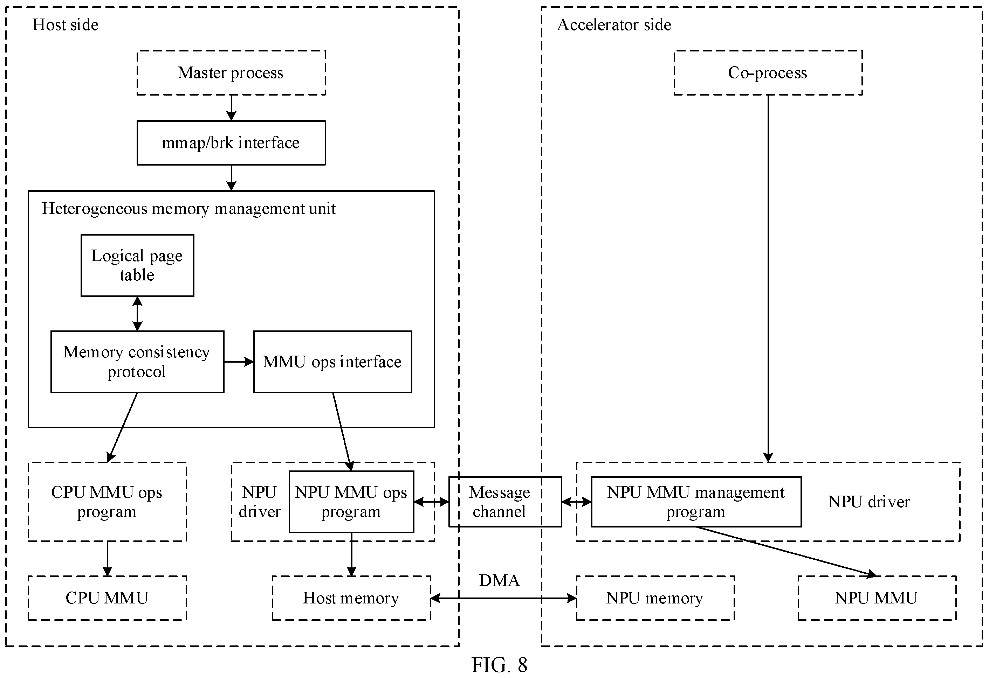

FIG. 8 is a diagram of a structure of data transmission between a host side and an accelerator side according to an embodiment of this application. As shown in FIG. 8, the host side may be a server, and the accelerator side may be an NPU. An operating system of the server may expand original memory management into heterogeneous memory management. Heterogeneous memory management may implement a memory consistency protocol based on a logical page table, which supports a UVAS programming framework in the peer-to-peer mode, and can improve running performance of an NPU operator.

In the server, the user mode includes a master process and an mmap/brk interface, and the kernel mode includes a heterogeneous memory management unit. The heterogeneous memory management unit includes a logical page table, a memory consistency protocol, and an MMU ops interface. The memory consistency protocol may implement interaction between a CPU MMU ops program and an NPU MMU ops program through the MMU ops interface and an NPU driver.

The NPU includes the NPU driver, and the NPU driver includes an NPU MMU management program. A message channel and a direct memory access (direct memory access, DMA) channel are connected between the server and the NPU. The message channel is connected between the NPU MMU ops program and the NPU MMU management program, and is configured to transmit a message at a software layer. The DMA channel is connected between host memory and NPU memory, and is configured to migrate data at a hardware layer.

In an initialization process of the server, a master process may be started, so that the server establishes a communication connection with the NPU, to mount the NPU to the master process. The master process may notify the NPU to create a co-process, and allows the co-process to be bound to the master process. When the server prepares memory required for NPU operator running, the mmap interface may be called in the user mode of the server to apply for the memory. After the mmap interface enters the kernel mode, in the kernel mode, a virtual address may be first applied for, and then the co-process of the NPU is notified to apply for the same virtual address. If the virtual address fails to be applied for in the kernel mode, the master process applies for another virtual address for another time, and applies for the same virtual address through the co-process until the application is successful. The NPU operator is a symbol, an instruction, or a function that runs a specific operation in the NPU.

In a process in which the master process of the server prepares input data for the NPU operator, after applying for a virtual address, the master process may write the input data of the NPU operator into the applied virtual address. When the NPU operator writes the input data, a server page fault is triggered. When processing the page fault, the master process of the server detects whether a mapping relationship exists in a logical page table of the master process of the server. If detecting that the mapping relationship does not exist in the logical page table of the master process, that is, a current virtual address is not mapped to physical memory, the master process may directly execute a page fault processing procedure of the server, update the logical page table, and establish, in the logical page table, a mapping relationship in which the applied virtual address points to server memory. After completing page fault processing, the master process enables the NPU operator to continue to write the input data.

In a process in which the master process of the server ensures, based on the memory consistency protocol, running of the NPU operator, when the NPU operator runs on the NPU to access the input data for the first time, an NPU page fault is triggered. The NPU generates page fault information, and transmits the page fault information to the server by using the NPU driver, so that the server detects whether a mapping relationship of the current virtual address exists in the logical page table of the server. The master process detects that the mapping relationship of the current virtual address exists in the logical page table of the master process, and determines host memory to which the current virtual address is mapped. The master process replicates a page of the host memory that is mapped to the current virtual address to the NPU memory. The master process updates the logical page table, and changes, in the logical page table, a mapping relationship that is of the current virtual address and that points to the host memory of the server to a mapping relationship that is of the current virtual address and that points to the NPU memory of the NPU.

When the NPU operator runs on the NPU to output a computing result, an NPU page fault is triggered. The NPU generates the page fault information, and transmits the page fault information to the server by using the NPU driver, so that the server detects whether the mapping relationship of the current virtual address exists in the logical page table of the server. Usually, when detecting that the mapping relationship of the current virtual address does not exist in the logical page table of the server, the server may directly call the NPU MMU ops program registered by the NPU to establish the mapping relationship. The server updates the logical page table, and establishes, in the logical page table, the mapping relationship that points to the NPU memory.

In a process in which the server reads the computing result generated by the NPU operator in the NPU, when the master process reads the computing result, the server page fault is triggered. The master process detects whether the mapping relationship of the current virtual address exists in the logical page table of the master process. The master process detects that the mapping relationship of the current virtual address exists in the logical page table of the master process, that is, the current virtual address is mapped to the NPU memory. In this case, the master process determines that the current virtual address is mapped to the NPU memory, and may map the NPU memory that is mapped to the current virtual address to corresponding host memory of the server, and replicate a page of the NPU memory that is mapped to the current virtual address to the corresponding host memory. The master process updates the logical page table, and changes, in the logical page table, the mapping relationship that is of the current virtual address and that points to the NPU memory of the NPU to the mapping relationship that is of the current virtual address and that points to the host memory of the server.

Before the NPU operator accesses the input data for the first time, the master process may call data prefetching (prefetching) provided by the hmadvise interface to prefetch the input data. When calling prefetching, the master process needs to pass a NUMA ID of the NPU. Prefetching evenly divides the input data, and allows the divided input data to be processed by a plurality of threads in parallel. The master process queries the logical page table, and after detecting that a mapping relationship between a virtual address of the input data and the server memory exists, enables the server to replicate a page to the NPU. The NPU updates the logical page table, and changes, in the logical page table, the mapping relationship that is of the current virtual address and that points to the host memory of the server to the mapping relationship that is of the current virtual address and that points to the NPU memory. When the NPU operator runs on the NPU, the NPU page fault does not need to be triggered, and the NPU operator can directly access the input data. This reduces operator execution time. In a unified heterogeneous memory management framework, the server and NPU prefetch data in advance to improve the running performance of the NPU operator.

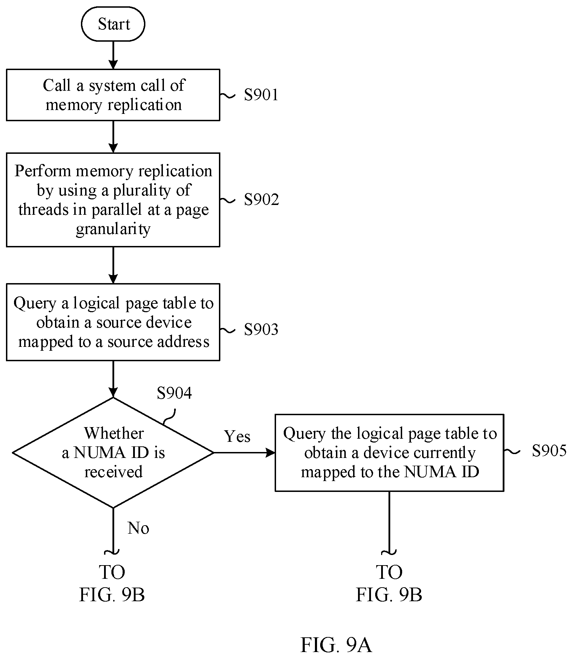

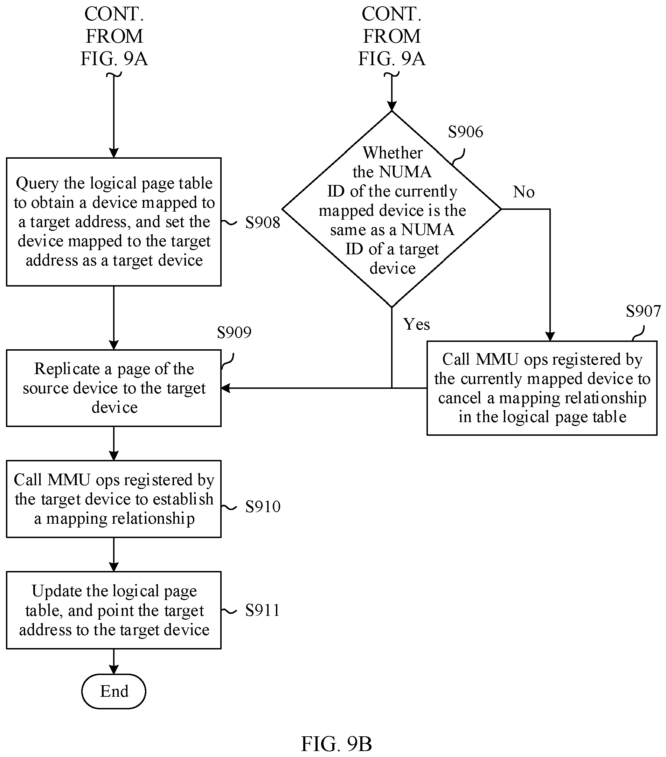

FIG. 9A and FIG. 9B are a schematic flowchart of performing memory replication by a server according to an embodiment of this application. As shown in FIG. 9A and FIG. 9B, a procedure of performing memory replication by the server is specifically as follows.

S901: The server in the kernel mode calls a system call (system call) of memory replication (hmemcpy).

The system call is a way for a program running in user space to request a service that requires higher permission for running from the operating system. The system call may provide an interface between a user program and the operating system, to implement a memory replication function.

S902: The server performs memory replication by using a plurality of threads in parallel at a page granularity. The page granularity means that a virtual address space is divided into pages of a fixed size, and the size usually is 4 KB or 2 MB.

S903: The server queries a logical page table to obtain a source device mapped to a source address.

When the server performs memory replication, the system call usually indicates that the source address and a target address exist, and data of a device corresponding to the source address is replicated to a device corresponding to a destination address. Both the source address and the target address are virtual addresses. The logical page table includes a mapping relationship, and the mapping relationship may map the virtual address to a physical address. The physical address may be a physical address of another device. The server may obtain through a query, from the logical page table, a device that corresponds to the physical address mapped to the source address, and determine that the device is the source device.

S904: The server detects whether a NUMA ID is received. In one case, the server detects the NUMA ID, and performs procedure S905. In another case, the server does not detect the NUMA ID, and performs procedure S908.

S905: The server queries the logical page table to obtain a device currently mapped to the NUMA ID.

S906: The server determines whether the NUMA ID of the currently mapped device is the same as a NUMA ID of a target device. In one case, the server determines that the NUMA ID of the currently mapped device is different from the NUMA ID of the target device, and performs procedure S907. In another case, the server determines that the NUMA ID of the currently mapped device is the same as the NUMA ID of the target device, and performs procedure S909.

S907: The server calls MMU ops registered by the currently mapped device to cancel the mapping relationship, invalidate a TLB, and release a physical page.

S908: The server queries the logical page table to obtain a device mapped to the target address, and sets the device mapped to the target address as the target device.

S909: The server replicates a page of the source device to the target device.

S910: The server calls MMU ops registered by the target device to establish a mapping relationship.

S911: The server updates the logical page table, and points the target address to the target device.

In this embodiment of this application, in a unified heterogeneous memory management framework, the server and an NPU implement parallel memory replication in any direction. The server in the kernel mode may use the system call of memory replication. In this case, physical locations of the source address and the target address do not need to be specified, and data is automatically obtained based on the logical page table, which improves usability. When data replication is performed between the server and the NPU, page prefetching semantics may be combined, and forwarding by a master node is not needed, which can efficiently utilize bandwidth of a high-speed bus between devices.

When the server uses the system call of memory replication to perform cross-node data replication, the physical locations of the source address and the target address do not need to be explicitly specified. The server in the kernel mode may obtain specific physical locations based on the logical page table, and directly complete data replication. In addition, a user may also specify the target device, for example, deliver the target device to the server through a heterogeneous NUMA ID. The server may use the system call of memory replication to directly and implicitly complete data replication from the source device to the target device. Compared with a mode (the NUMA ID is not specified) of performing prefetching and then replication or a mode (the NUMA ID is not specified) of performing replication and then prefetching, this mode reduces overheads for performing memory replication once. In a process in which the server uses the system call of memory replication, data is parallelized at a memory page granularity, which maximizes bus bandwidth. In addition, forwarding by the master node is not needed, which can fully utilize the high-speed bus between devices.

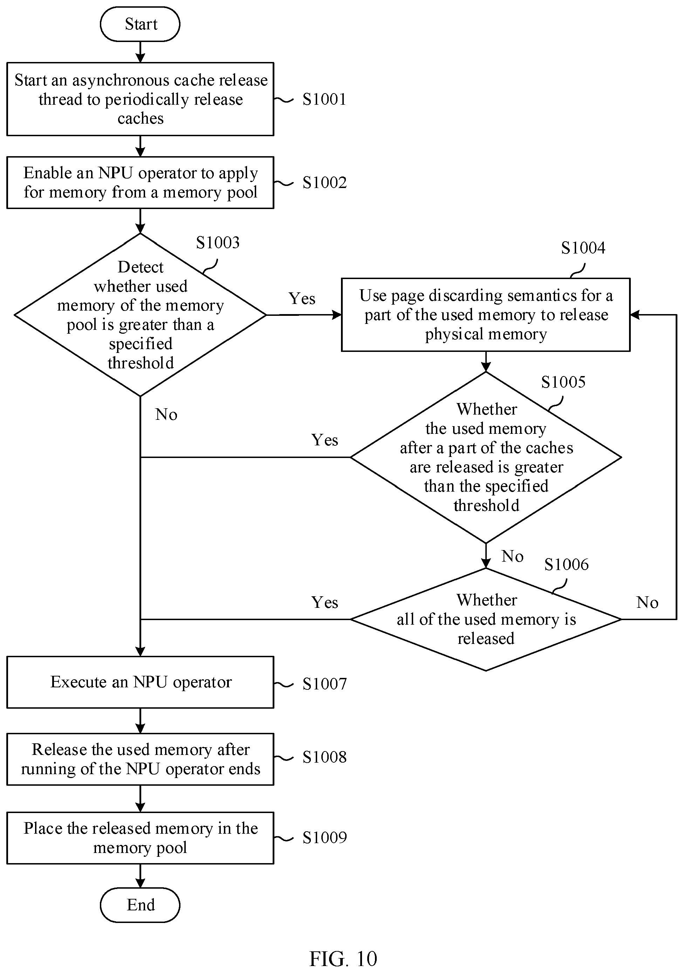

FIG. 10 is a schematic flowchart of applying for memory in a user mode based on an AI framework according to an embodiment of this application. As shown in FIG. 10, an example in which in the user mode, the AI framework is MindSpore is used, and a procedure of applying for memory is specifically as follows.

S1001: MindSpore starts an asynchronous cache release thread to periodically release caches.

S1002: MindSpore enables an NPU operator to apply for the memory from a memory pool.

S1003: MindSpore detects whether used memory of the memory pool is greater than a specified threshold. In one case, MindSpore detects that the used memory of the memory pool is greater than the specified threshold, and performs step S1004. In another case, MindSpore detects that the used memory of the memory pool is less than or equal to the specified threshold, and performs step S1007.

S1004: MindSpore uses page discarding semantics for a part of the used memory to release physical memory.

S1005: MindSpore detects whether the used memory after a part of the caches are released is greater than the specified threshold. In one case, MindSpore detects that the used memory after the part of the caches are released is greater than the specified threshold, and performs step S 1007. In another case, MindSpore detects that the used memory after the part of the caches are released is less than or equal to the specified threshold, and performs step S1006.

S1006: MindSpore detects whether all of the used memory is released. In one case, MindSpore detects that all of the used memory is released, and performs step S1007. In another case, MindSpore detects that all of the used memory is not completely released, and performs step S1004.

S1007: MindSpore executes the NPU operator.

S1008: MindSpore releases the used memory after running of the NPU operator ends.

S1009: MindSpore places the released memory in the memory pool.

In this embodiment of this application, a server and an NPU may implement memory management with high memory usage based on the page discard semantics provided by the MindSpore framework, a UVAS programming framework, and a GMEM interface. Due to a static mapping between a virtual address and physical memory, when applying for the virtual address through an NPU software stack, MindSpore can use only a virtual address space whose size is equal to that of NPU physical memory, to implement secondary management. When MindSpore generates a memory fragment, lowest physical memory usage may be only 30%. Therefore, a GMEM system cancels a restriction on the static mapping between the virtual addresses and the physical memory, and eliminates the memory fragment generated during memory management by MindSpore, which improves the memory usage to over 99%.

Before delivering the NPU operator, MindSpore needs to apply for the memory from the memory pool for running the NPU operator. The memory pool is implemented based on the UVAS, and is not limited by the size of the NPU physical memory. Therefore, the virtual address can always be successfully applied for. MindSpore needs to collect statistics on whether the used memory is greater than the specified threshold. If the used memory is greater than the specified threshold, MindSpore needs to use the page discarding semantics for cached released memory to release the physical memory until the threshold is met or all caches are released. If the used memory is less than or equal to the specified threshold, the NPU operator is executed. After running of the NPU operator ends, the applied memory is released, and is cached in the memory pool. The memory can be reused or actually released. The page discarding semantics is periodically asynchronously called for the cached memory to release the memory.

In this embodiment of this application, an NPU memory reclamation unit may be set in an NPU driver of an NPU. When the memory is insufficient, the NPU memory reclamation unit may borrow server memory to implement an overcommitment function of the NPU. When the NPU memory reclamation unit needs to reclaim NPU physical memory, the NPU memory reclamation unit may extract, based on an eviction policy, an NPU physical page from a linked list formed by concatenating NPU physical pages that are being currently used. Then, the NPU memory reclamation unit first applies for a physical page on the server at a page granularity, completes page migration to the server for the selected NPU physical page, and updates a logical page table to point to the server memory. The NPU memory reclamation unit may temporarily store, in the server memory, a part of data in the NPU physical memory to release the NPU physical memory for running an NPU operator. When the swapped-out data is accessed by the NPU operator again, an NPU page fault is triggered.

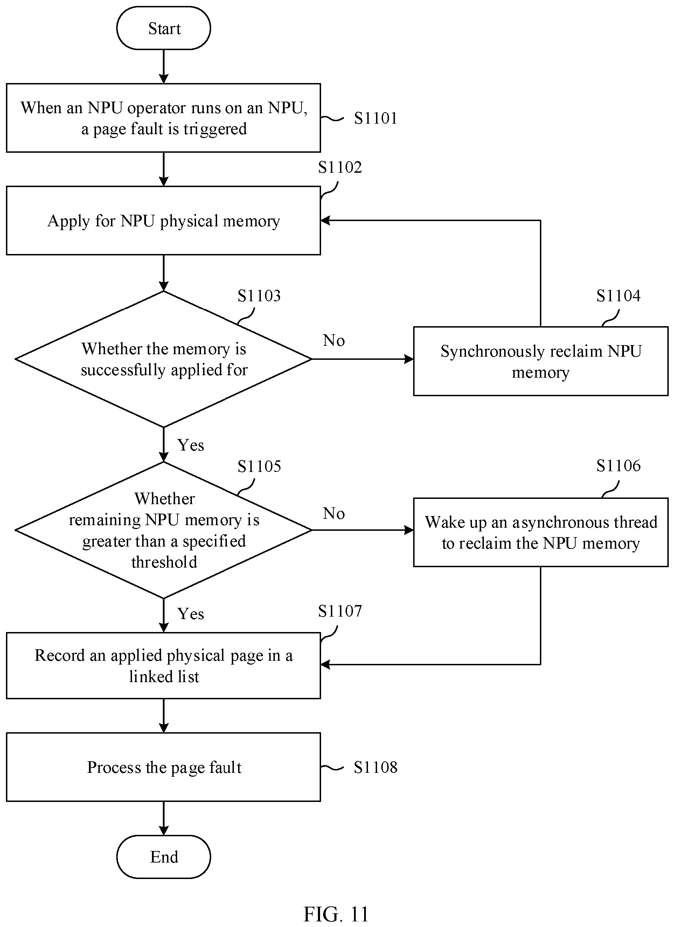

FIG. 11 is a schematic flowchart of performing memory overcommitment by an NPU according to an embodiment of this application. As shown in FIG. 11, a procedure in which the NPU performs memory overcommitment is specifically as follows.

S1101: When the NPU operator runs on the NPU, the page fault is triggered.

S1102: The NPU operator applies for the NPU physical memory.

S1103: The NPU operator detects whether the memory is successfully applied for. In one case, when detecting that the memory fails to be applied for, the NPU operator performs procedure S1104. In another case, when detecting that the memory is successfully applied for, the NPU operator performs procedure S1105.

S1104: The NPU operator synchronously reclaims NPU memory.

S1105: The NPU operator detects whether remaining NPU memory is greater than a specified threshold. In one case, when detecting that the remaining NPU memory is less than or equal to the specified threshold, the NPU operator performs procedure S1106. In another case, when detecting that the remaining NPU memory is greater than the specified threshold, the NPU operator performs procedure S1107.

S1106: The NPU operator wakes up an asynchronous thread to reclaim the NPU memory.

S1107: The NPU operator records an applied physical page in a linked list.

S1108: The NPU operator processes the page fault.

In this embodiment of this application, when running of the NPU operator triggers the page fault, the NPU operator needs to apply for the NPU physical memory. If the application fails, the NPU operator reclaims the NPU memory. If the application is successful, the NPU operator checks whether current remaining NPU memory is greater than the specified threshold. If the current remaining NPU memory is less than the threshold, the NPU operator needs to wake up the asynchronous thread to reclaim the NPU memory. Finally, the NPU operator records the applied physical page in the linked list, and continues to process the page fault.

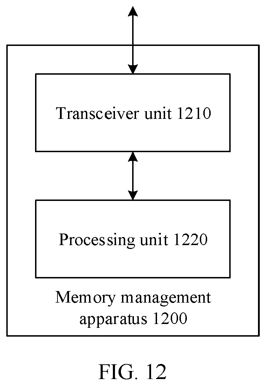

FIG. 12 is a diagram of a structure of a memory management apparatus according to an embodiment of this application. As shown in FIG. 12, the memory management apparatus 1200 may be divided into a transceiver unit 1210 and a processing unit 1220 based on an execution function. A specific implementation process of the memory management apparatus 1200 is as follows.

The transceiver unit 1210 is configured to receive device information of at least one mounted accelerator device, where the device information includes a physical memory address, memory management unit operations, and an accelerator device address that are of the accelerator device. The processing unit 1220 is configured to separately configure a memory management unit operations interface for the at least one loading device, where the memory management unit operations interface uses, by using the memory management unit operations, a driver of the accelerator device that corresponds to the accelerator device address. The processing unit 1220 is further configured to manage, by using the driver of the accelerator device, physical memory that corresponds to the physical memory address of the accelerator device, to read and write data.

In an implementation, the transceiver unit 1210 is further configured to receive a non-uniform memory access NUMA identifier ID. The processing unit 1220 is further configured to: in response to an accelerator device that corresponds to the NUMA ID being in a peer-to-peer mode, send a request instruction to the accelerator device that corresponds to the NUMA ID, where the request instruction instructs the accelerator device that corresponds to the NUMA ID to apply for a first virtual address, and the first virtual address is a virtual address applied for by the GMEM system.

In an implementation, the processing unit 1220 is further configured to: in response to a page fault being triggered when data is written, detect whether a mapping relationship of a host exists in a logical page table of a GMEM system, where the page fault means that a physical address cannot be mapped based on the virtual address, and the mapping relationship is a relationship in which the virtual address is mapped to the physical address. The processing unit 1220 is further configured to: in response to the mapping relationship of the host not existing in the logical page table of the GMEM system, establish the mapping relationship of the host, and store the mapping relationship of the host in the logical page table of the GMEM system.

In an implementation, the transceiver unit 1210 is further configured to receive page fault information of a first accelerator device, where the page fault information indicates that a page fault is triggered when the first accelerator device accesses the virtual address, and the at least one accelerator device includes the first accelerator device. The processing unit 1220 is further configured to: query, based on the page fault information, whether a mapping relationship of the virtual address accessed by the first accelerator device exists in the logical page table of the GMEM system. The processing unit 1220 is further configured to: in response to the mapping relationship of the virtual address accessed by the first accelerator device not existing in the logical page table of the GMEM system, call the memory management unit operations interface of the first accelerator device to establish the mapping relationship of the virtual address accessed by the first accelerator device. The processing unit 1220 is further configured to: in response to the mapping relationship of the virtual address existing in the logical page table of the GMEM system, call the memory management unit operations interface of the first accelerator device to replicate data in memory that is mapped to the virtual address accessed by the first accelerator device to memory of the first accelerator device, and establish a mapping relationship of the first accelerator device.

In an implementation, the processing unit 1220 is further configured to: in response to the page fault being triggered when data output by the first accelerator device is read, detect whether a mapping relationship of a current virtual address exists in the logical page table of the GMEM system. The processing unit 1220 is further configured to: in response to the mapping relationship of the current virtual address existing in the logical page table of the GMEM system, replicate, to memory of the host, data in the memory that is of the first accelerator device and to which the current virtual address points, and change a mapping relationship of the memory that is of the first accelerator device and to which the current virtual address points to a mapping relationship of the memory that is of the host and to which the current virtual address points.

In an implementation, the processing unit 1220 is further configured to: respond to a call of a system call of memory replication. The processing unit 1220 is further configured to determine, based on the logical page table of the GMEM system, a source device corresponding to a source address of the system call and a target device corresponding to a target address of the system call. The processing unit 1220 is further configured to replicate data of the source device to the target device.

In an implementation, the processing unit 1220 is further configured to: after receiving the NUMA ID, replicate the data of the source device to the accelerator device that corresponds to the NUMA ID.

In an implementation, the processing unit 1220 is further configured to detect whether used memory of a memory pool is greater than a specified threshold. The processing unit 1220 is further configured to: in response to the used memory of the memory pool being greater than the specified threshold, release a part or all of memory that is no longer used after use.

In an implementation, the transceiver unit 1210 is further configured to: after receiving the NUMA ID and the virtual address, query whether a mapping relationship of the virtual address exists in the logical page table of the GMEM system. The processing unit 1220 is further configured to: in response to the mapping relationship of the virtual address existing in the logical page table of the GMEM system, replicate the data in the memory that is mapped to the virtual address to memory of the accelerator device that corresponds to the NUMA ID, and establish, through a memory management unit operations interface of the accelerator device that corresponds to the NUMA ID, a mapping relationship between the virtual address and the memory of the accelerator device that corresponds to the NUMA ID. The processing unit 1220 is further configured to: in response to the mapping relationship of the virtual address not existing in the logical page table of the GMEM system, establish, through the memory management unit operations interface of the accelerator device that corresponds to the NUMA ID, the mapping relationship between the virtual address and the memory of the accelerator device that corresponds to the NUMA ID.

In an implementation, the transceiver unit 1210 is further configured to receive failure information of the first accelerator device, where the failure information is a message indicating that the first accelerator device fails to apply for memory. The transceiver unit 1210 is further configured to send a replication instruction to the first accelerator device, where the replication instruction instructs the first accelerator device to replicate data in memory that is being used to the memory of the host, and release the memory that is being used.

An embodiment of this application further provides a computing device. The computing device includes at least one storage and at least one processor. The at least one processor may perform the foregoing correspondingly protected technical solutions shown in FIG. 2 to FIG. 11, so that the computing device has technical effects of the foregoing protected technical solutions.

An embodiment of this application further provides a computer-readable storage medium. The computer-readable storage medium stores a computer program. When the computer program is executed on a computer, the computer is enabled to perform the memory management method according to any one of FIG. 2 to FIG. 11 and corresponding description content.

An embodiment of this application further provides a computer program product. The computer program product stores instructions. When the instructions are executed by a computer, the computer is enabled to implement the memory management method according to any one of FIG. 2 to FIG. 11 and corresponding description content.

A person of ordinary skill in the art may be aware that in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable device, carrier or medium. For example, a computer-readable medium may include but is not limited to: a magnetic storage device (for example, a hard disk, a floppy disk, or a magnetic tape), an optical disc (for example, a compact disc (compact disc, CD) and a digital versatile disc (digital versatile disc, DVD)), a smart card, and a flash storage device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

In the foregoing embodiment, the memory management apparatus 1200 in FIG. 12 may be completely or partially implemented through software, hardware, firmware, or any combination thereof. When software is used for the implementation, the memory management apparatus 1200 may be completely or partially implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. A part or all of the units may be selected based on an actual requirement to achieve the objectives of the solutions of embodiments.

When the functions are implemented in a form of a software functional unit and sold or used as an independent product, the functions may be stored in a computer-readable storage medium. Based on such an understanding, the technical solutions of embodiments of this application essentially, or the part contributing to the current technology, or a part of the technical solutions may be implemented in a form of a software product. The computer software product is stored in a storage medium, and includes several instructions for instructing a computer device (which may be a personal computer, a server, or an access network device) to perform all or a part of the steps of the methods described in various embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application.

## Claims

1. A memory management method, wherein the method is executed by a generalized memory management GMEM system, and the method comprises:
receiving device information of at least one mounted accelerator device, wherein the device information comprises a physical memory address, memory management unit operations, and an accelerator device address that are of the accelerator device;
separately configuring a memory management unit operations interface for the at least one loading device, wherein the memory management unit operations interface uses, by using the memory management unit operations, a driver of the accelerator device that corresponds to the accelerator device address; and
managing, by using the driver of the accelerator device, physical memory that corresponds to the physical memory address of the accelerator device, to read and write data.

2. The method according to claim 1, wherein the method further comprises:
receiving a non-uniform memory access NUMA identifier ID; and
in response to an accelerator device that corresponds to the NUMA ID being in a peer-to-peer mode, sending a request instruction to the accelerator device that corresponds to the NUMA ID, wherein the request instruction instructs the accelerator device that corresponds to the NUMA ID to apply for a first virtual address, and the first virtual address is a virtual address applied for by the GMEM system.

3. The method according to claim 1 or 2, wherein the method further comprises:
in response to a page fault being triggered when data is written, detecting whether a mapping relationship of a host exists in a logical page table of the GMEM system, wherein the page fault means that a physical address cannot be mapped based on the virtual address, and the mapping relationship is a relationship in which the virtual address is mapped to the physical address; and
in response to the mapping relationship of the host not existing in the logical page table of the GMEM system, establishing the mapping relationship of the host, and storing the mapping relationship of the host in the logical page table of the GMEM system.

4. The method according to any one of claims 1 to 3, wherein the method further comprises:
receiving page fault information of a first accelerator device, wherein the page fault information indicates that a page fault is triggered when the first accelerator device accesses the virtual address, and the at least one accelerator device comprises the first accelerator device;
querying, based on the page fault information, whether a mapping relationship of the virtual address accessed by the first accelerator device exists in the logical page table of the GMEM system;
in response to the mapping relationship of the virtual address accessed by the first accelerator device not existing in the logical page table of the GMEM system, calling the memory management unit operations interface of the first accelerator device to establish the mapping relationship of the virtual address accessed by the first accelerator device; and
in response to the mapping relationship of the virtual address existing in the logical page table of the GMEM system, calling the memory management unit operations interface of the first accelerator device to replicate data in memory that is mapped to the virtual address accessed by the first accelerator device to memory of the first accelerator device, and establishing a mapping relationship of the first accelerator device.

5. The method according to any one of claims 1 to 4, wherein the method further comprises:
in response to the page fault being triggered when data output by the first accelerator device is read, detecting whether a mapping relationship of a current virtual address exists in the logical page table of the GMEM system; and
in response to the mapping relationship of the current virtual address existing in the logical page table of the GMEM system, replicating data, to memory of the host, in the memory that is of the first accelerator device and to which the current virtual address points, and changing a mapping relationship of the memory that is of the first accelerator device and to which the current virtual address points to a mapping relationship of the memory that is of the host and to which the current virtual address points.

6. The method according to any one of claims 1 to 5, wherein the method further comprises:
responding to a call of a system call (system call) of memory replication (hmemcpy);
determining, based on the logical page table of the GMEM system, a source device corresponding to a source address of the system call and a target device corresponding to a target address of the system call; and
replicating data of the source device to the target device.

7. The method according to claim 6, wherein the method further comprises:
after receiving the NUMA ID, replicating the data of the source device to the accelerator device that corresponds to the NUMA ID.

8. The method according to any one of claims 1 to 7, wherein the method further comprises:
detecting whether used memory of a memory pool is greater than a specified threshold; and
in response to the used memory of the memory pool being greater than the specified threshold, releasing a part or all of memory that is no longer used after use.

9. The method according to any one of claims 1 to 8, wherein the method further comprises:
after receiving the NUMA ID and the virtual address, querying whether a mapping relationship of the virtual address exists in the logical page table of the GMEM system;
in response to the mapping relationship of the virtual address existing in the logical page table of the GMEM system, replicating the data in the memory that is mapped to the virtual address to memory of the accelerator device that corresponds to the NUMA ID**,** and establishing, through a memory management unit operations interface of the accelerator device that corresponds to the NUMA ID**,** a mapping relationship between the virtual address and the memory of the accelerator device that corresponds to the NUMA ID; and
in response to the mapping relationship of the virtual address not existing in the logical page table of the GMEM system, establishing, through a memory management unit operations interface of the accelerator device that corresponds to the NUMA ID, the mapping relationship between the virtual address and the memory of the accelerator device that corresponds to the NUMA ID.

10. The method according to any one of claims 1 to 9, wherein the method further comprises:
receiving failure information of the first accelerator device, wherein the failure information is a message indicating that the first accelerator device fails to apply for memory; and
sending a replication instruction to the first accelerator device, wherein the replication instruction instructs the first accelerator device to replicate data in memory that is being used to the memory of the host, and release the memory that is being used.

11. A memory management apparatus, comprising:
a transceiver unit, configured to receive device information of at least one mounted accelerator device, wherein the device information comprises a physical memory address, memory management unit operations, and an accelerator device address that are of the accelerator device; and
a processing unit, configured to: separately configure a memory management unit operations interface for the at least one loading device, wherein the memory management unit operations interface uses, by using the memory management unit operations, a driver of the accelerator device that corresponds to the accelerator device address; and
manage, by using the driver of the accelerator device, physical memory that corresponds to the physical memory address of the accelerator device, to read and write data.

12. The apparatus according to claim 11, wherein
the transceiver unit is further configured to receive a non-uniform memory access NUMA identifier ID; and
the processing unit is further configured to: in response to an accelerator device that corresponds to the NUMA ID being in a peer-to-peer mode, send a request instruction to the accelerator device that corresponds to the NUMA ID, wherein the request instruction instructs the accelerator device that corresponds to the NUMA ID to apply for a first virtual address, and the first virtual address is a virtual address applied for by the GMEM system.

13. The apparatus according to claim 11 or 12, wherein
the processing unit is further configured to: in response to a page fault being triggered when data is written, detect whether a mapping relationship of a host exists in a logical page table of a GMEM system, wherein the page fault means that a physical address cannot be mapped based on the virtual address, and the mapping relationship is a relationship in which the virtual address is mapped to the physical address; and
in response to the mapping relationship of the host not existing in the logical page table of the GMEM system, establish the mapping relationship of the host, and store the mapping relationship of the host in the logical page table of the GMEM system.

14. The apparatus according to any one of claims 11 to 13, wherein
the transceiver unit is further configured to receive page fault information of a first accelerator device, wherein the page fault information indicates that a page fault is triggered when the first accelerator device accesses the virtual address, and the at least one accelerator device comprises the first accelerator device; and
the processing unit is further configured to: query, based on the page fault information, whether a mapping relationship of the virtual address accessed by the first accelerator device exists in the logical page table of the GMEM system;
in response to the mapping relationship of the virtual address accessed by the first accelerator device not existing in the logical page table of the GMEM system, call the memory management unit operations interface of the first accelerator device to establish the mapping relationship of the virtual address accessed by the first accelerator device; and
in response to the mapping relationship of the virtual address existing in the logical page table of the GMEM system, call the memory management unit operations interface of the first accelerator device to replicate data in memory that is mapped to the virtual address accessed by the first accelerator device to memory of the first accelerator device, and establish a mapping relationship of the first accelerator device.

15. The apparatus according to any one of claims 11 to 14, wherein
the processing unit is further configured to: in response to the page fault being triggered when data output by the first accelerator device is read, detect whether a mapping relationship of a current virtual address exists in the logical page table of the GMEM system; and
in response to the mapping relationship of the current virtual address existing in the logical page table of the GMEM system, replicate data, to memory of a host, in the memory that is of the first accelerator device and to which the current virtual address points, and change a mapping relationship of the memory that is of the first accelerator device and to which the current virtual address points to a mapping relationship of the memory that is of the host and to which the current virtual address points.

16. The apparatus according to any one of claims 11 to 15, wherein
the processing unit is further configured to: respond to a call of a system call of memory replication;
determine, based on the logical page table of the GMEM system, a source device corresponding to a source address of the system call and a target device corresponding to a target address of the system call; and
replicate data of the source device to the target device.

17. The apparatus according to claim 16, wherein
the processing unit is further configured to: after receiving the NUMA ID, replicate the data of the source device to the accelerator device that corresponds to the NUMA ID.

18. The apparatus according to any one of claims 11 to 17, wherein
the processing unit is further configured to: detect whether used memory of a memory pool is greater than a specified threshold; and
in response to the used memory of the memory pool being greater than the specified threshold, release a part or all of memory that is no longer used after use.

19. The apparatus according to any one of claims 11 to 18, wherein
the transceiver unit is further configured to: after receiving the NUMA ID and the virtual address, query whether a mapping relationship of the virtual address exists in the logical page table of the GMEM system; and
the processing unit is further configured to: in response to the mapping relationship of the virtual address existing in the logical page table of the GMEM system, replicate the data in the memory that is mapped to the virtual address to memory of the accelerator device that corresponds to the NUMA ID, and establish, through a memory management unit operations interface of the accelerator device that corresponds to the NUMA ID, a mapping relationship between the virtual address and the memory of the accelerator device that corresponds to the NUMA ID; and
in response to the mapping relationship of the virtual address not existing in the logical page table of the GMEM system, establish, through the memory management unit operations interface of the accelerator device that corresponds to the NUMA ID, the mapping relationship between the virtual address and the memory of the accelerator device that corresponds to the NUMA ID.

20. The apparatus according to any one of claims 11 to 19, wherein
the transceiver unit is further configured to: receive failure information of the first accelerator device, wherein the failure information is a message indicating that the first accelerator device fails to apply for memory; and
send a replication instruction to the first accelerator device, wherein the replication instruction instructs the first accelerator device to replicate data in memory that is being used to the memory of the host, and release the memory that is being used.

21. A computing device, comprising:
at least one storage; and
at least one processor, wherein the at least one processor is configured to execute instructions stored in the at least one storage, to enable the computing device to perform the method according to any one of claims 1 to 10.

22. A computer-readable storage medium, wherein the computer-readable storage medium stores a computer program, and when the computer program is executed on a computer, the computer is enabled to perform the method according to any one of claims 1 to 10.

23. A computer program product, wherein the computer program product stores instructions, and when the instructions are executed by a computer, the computer is enabled to implement the method according to any one of claims 1 to 10.
